# EUROPÄISCHE PATENTSCHRIFT

(11) **EP 3 898 363 B1**
(45) Veröffentlichungstag und Bekanntmachung des Hinweises auf die Patenterteilung: **24.01.2024**
(21) Anmeldenummer: 19817176.1
(22) Anmeldetag: 29.11.2019
(51) Int. Cl.: B60T 17/22, B60T 13/14, B60T 13/66, F16D 65/78

(54) **VERFAHREN ZUR PRÄVENTIVEN DAMPFBLASENVERMEIDUNG IN EINER HYDRAULISCHEN KRAFTFAHRZEUGBREMSANLAGE UND HYDRAULISCHE KRAFTFAHRZEUGBREMSANLAGE**
METHOD FOR THE PREVENTIVE AVOIDANCE OF VAPOUR BUBBLES IN A HYDRAULIC MOTOR VEHICLE BRAKE SYSTEM AND HYDRAULIC MOTOR VEHICLE BRAKE SYSTEM
PROCÉDÉ POUR ÉVITER DE MANIÈRE PRÉVENTIF LES BULLES DE VAPEUR DANS UN SYSTÈME DE FREINAGE HYDRAULIQUE DE VÉHICULE À MOTEUR ET SYSTÈME DE FREINAGE HYDRAULIQUE DE VÉHICULE À MOTEUR

(30) Priorität: 21.12.2018 DE 102018222754
(43) Veröffentlichungstag der Anmeldung: 27.10.2021
(73) Patentinhaber: VOLKSWAGEN AKTIENGESELLSCHAFT, 38440 Wolfsburg (DE)
(72) Erfinder: STEBNER, Frank, 38108 Braunschweig (DE); SCHÖNEMANN, Bodo, 38104 Braunschweig (DE)
(86) Internationale Anmeldenummer: PCT/EP2019/083180
(87) Internationale Veröffentlichungsnummer: WO 2020/126418

(56) Entgegenhaltungen:
- EP-A1- 0 869 293
- EP-A1- 3 309 021
- DE-A1- 1 530 681
- DE-A1- 2 332 394
- DE-A1- 10 254 818
- DE-A1- 10 349 664
- DE-B4- 10 349 664

## Beschreibung

Die Erfindung betrifft ein Verfahren zur präventiven Dampfblasenvermeidung in einer hydraulischen Kraftfahrzeugbremsanlage eines Kraftfahrzeugs gemäß Oberbegriff des Patentanspruchs 1. Die Erfindung betrifft ferner eine hydraulische Kraftfahrzeugbremsanlage für ein Kraftfahrzeug und auch ein Kraftfahrzeug mit einer solchen Kraftfahrzeugbremsanlage.

Während einer Fahrt mit vielen aufeinander folgenden Bremsvorgängen findet insbesondere bei sportlicher Fahrweise oder bei längerer Bergabfahrt eine starke Erwärmung der Bremsflüssigkeit statt, die dann, wenn sie zur Dampfblasenbildung führt, die Funktionsfähigkeit der Bremse beeinträchtigt. Dies gilt nicht nur während der Fahrt, sondern auch nach dem Abstellen des Fahrzeugs. Beim Ausbleiben des kühlenden Fahrtwindes geht die Wärme von den Radbremsbauteilen auf die Bremsflüssigkeit über, sodass sich diese im Bereich der Radbremsen lokal stark erwärmt und die Gefahr der Dampfblasenbildung besteht.

In der den nächstliegenden Stand der Technik bildenden DE 103 49 664 A1 wird daher eine hydraulische Bremsanlage für Kraftfahrzeuge vorgeschlagen, bei der die Bremsflüssigkeit durch eine Kreislaufkühlung mittels Rückführleitung wirksam gekühlt werden kann. Der Kreislauf ist durch eine Pumpe aktivierbar. Hierdurch wird im Fahrzeugstillstand die Bremsflüssigkeit im Kreislauf gekühlt und der Wärmequelle im Bereich der Radbremse wieder zugeführt, wobei nicht nur die Bremsflüssigkeit sondern auch der die Bremswärme aufnehmende Bereich gekühlt werden und eine schädliche Erwärmung und eine Dampfblasenbildung verhindert oder wenigsten vermindert werden. Es kann ein Sensor zur Ermittlung der Temperatur im Bereich der Radbremse oder der Temperatur der Bremsflüssigkeit vorgesehen sein, dessen Messwerte zu einer Steuereinrichtung übertragbar sind, wobei die Steuereinrichtung den Kreislauf bei einem Anstieg der Temperatur über einen bestimmten Temperaturwert aktiviert und bei einem Abfall unter einen bestimmten Temperaturwert abschaltet.

DE 102 54 818 A1 offenbart ein Verfahren, bei dem durch gezieltes Ansteuern von Bremskomponenten ein Umwälzen der Hydraulikflüssigkeit innerhalb des Hydrauliksystems der Bremsanlage hervorgerufen wird, wodurch eine Durchmischung der Bremsflüssigkeit erfolgt und eine lokale Überhitzung vermieden wird. 1i

Zum Stand der Technik wird ferner hingewiesen auf die DE 15 30 681 A, in der eine hydraulische Fahrzeugbremse beschrieben ist, auf die EP 3 309 021 A1, in der ein Fahrzeugbremssystem mit Zwangsrückführung der Bremsflüssigkeit beschrieben ist, und auf die EP 0 869 293 A1 sowie auf die DE 23 32 394 A1, in denen eine hydraulische Bremsanlage bzw. ein hydraulisches Bremssystem für Kraftfahrzeuge beschrieben sind.

Mit dem erfindungsgemäßen Verfahren des Patentanspruchs 1 wird nun eine weitere Möglichkeit zur Dampfblasenvermeidung aufgezeigt, die keine Rückführleitung benötigt. Mit nebengeordneten Patentansprüchen erstreckt sich die Erfindung auch auf eine hydraulische Kraftfahrzeugbremsanlage bzw. auf eine hydraulische Bremsanlage für ein Kraftfahrzeug sowie auf ein Kraftfahrzeug, insbesondere ein Personenkraftwagens (PKW) oder ein leichtes Nutzfahrzeug (z. B. Transporter), das eine solche hydraulische Kraftfahrzeugbremsanlage aufweist. Vorteilhafte Weiterbildungen und Ausgestaltungen der Erfindung ergeben sich analog für alle Erfindungsgegenstände aus den abhängigen Patentansprüchen, der nachfolgenden Erfindungsbeschreibung und auch aus den Figuren der Zeichnung.

Das erfindungsgemäße Verfahren zur präventiven Dampfblasenvermeidung in der hydraulischen Kraftfahrzeugbremsanlage eines Kraftfahrzeugs, insbesondere eines Personenkraftwagens (PKW) oder eines leichten Nutzfahrzeugs, welche
- vordere Radbremsen und hintere Radbremsen;
- einen Hauptbremszylinder,
- ein Fahrdynamikregelungsmodul mit Steuerventilen; sowie
- hydraulische Bremsdruckleitungen mit denen die Radbremsen, insbesondere einzeln, am Fahrdynamikregelungsmodul angeschlossen sind;
aufweist, ist dadurch gekennzeichnet, dass nach dem Abstellen des Kraftfahrzeugs im Fahrzeugstillstand die Steuerventile des Fahrdynamikregelungsmoduls geöffnet werden und in Intervallen (Druckintervallen) ein hydraulischer Druck erzeugt und dadurch Bremsflüssigkeit in Richtung der Radbremsen gefördert wird, wobei die Bremsflüssigkeit in den Intervallpausen (d. h. zwischen den Druckintervallen) zurückfließt, sodass in den Bremsdruckleitungen eine Durchmischung von warmer und kühler oder zumindest kühlerer Bremsflüssigkeit erfolgt und dadurch (präventiv) eine Dampfblasenbildung vermieden wird.

Bevorzugt ist eine automatische Verfahrenssteuerung vorgesehen, insbesondere mithilfe eines entsprechend ausgebildeten Steuergeräts, das das Steuergerät des Fahrdynamikregelungsmoduls und/oder das Steuergerät eines elektromechanischen Bremskraftverstärkers sein kann. Bevorzugt wird das Verfahren nur bei unbetätigtem Bremspedal ausgeführt. Dies kann abgefragt und in der Verfahrenssteuerung berücksichtigt werden.

Das Fahrdynamikregelungsmodul ist die zentrale Einrichtung einer Fahrdynamikregelung (ESC), womit Radbremsdrücke gezielt abgesenkt und/oder aufgebaut werden können. Im Weiteren wird auf entsprechende Fachliteratur verwiesen. Die Steuerventile des Fahrdynamikregelungsmoduls sind typischerweise den einzelnen hydraulischen Bremsdruckleitungen, die zu den Radbremsen führen, vorgeschaltet und ermöglichen eine fahrsituationsabhängigen Steuerung des Bremsdrucks an jeder Radbremse.

Erfindungsgemäß werden je nach dem die Steuerventile zu den vorderen Radbremsen und/oder zu den hinteren Radbremsen geöffnet, sodass intervallweise bzw. zyklisch ein vergleichweise kühles oder kühleres Bremsflüssigkeitsvolumen zu den Radbremsen gedrückt bzw. verschoben werden kann, welches sich dann innerhalb der betreffenden Bremsdruckleitungen mit der bereits in den Bremsdruckleitungen befindlichen und vergleichweise warmen bzw. wärmeren Bremsflüssigkeit vermischt. Der in Intervallen erzeugte hydraulische Druck kann z. B. 20 bar bis 30 bar betragen, kann aber auch niedriger oder höher sein. In den Intervallpausen kann (bei geöffneten Steuerventilen) ein entsprechendes Bremsflüssigkeitsvolumen zurückfließen. Der Rückfluss erfolgt bspw. in einen Ausgleichsbehälter am Fahrdynamikregelungsmodul oder am Hauptbremszylinder. Auf diese Weise findet innerhalb der Bremsdruckleitungen quasi ein sukzessiver Wärmetausch statt. Obwohl mitunter nur vergleichsweise kleine Bremsflüssigkeitsvolumen verschoben werden, kann das sogenannte Nachheizen (d. h. der von den Radbremsbauteilen verursachte Wärmeeintrag in die Bremsflüssigkeit) kompensiert und eine lokale Überhitzungen verhindert werden. Bei abgestelltem Kraftfahrzeug wird die Bildung von Dampfblasen präventiv, d. h. im Vorhinein, vermieden.

Die Steuerung des erfindungsgemäßen Verfahrens erfolgt bevorzugt mithilfe eines Temperaturmodells. Sozusagen basiert die Verfahrenssteuerung auf einem Temperaturmodell. Damit ist insbesondere gemeint, dass nach dem Abstellen des Kraftfahrzeugs die tatsächliche Temperatur der Bremsflüssigkeit im Bereich der Radbremsen nicht gemessen, sondern durch Anwendung eines Algorithmus und/oder einer Simulation, vorzugsweise unter Zuhilfenahme einer Computereinrichtung oder dergleichen, ermittelt wird. Das Temperaturmodell kann als Software ausgebildet und Bestandteil des Steuergeräts sein.

Bevorzugt werden bei der Verfahrenssteuerung vorausgehende Fahrzustände (vor dem Abstellen des Kraftfahrzeugs) berücksichtigt bzw. einbezogen. Solche als kritisch zu bezeichnende Fahrzustände sind insbesondere eine sportliche Fahrweise mit vielen aufeinanderfolgenden Bremsvorgängen und/oder einer längere (mehrminütige) Bergabfahrt mit vielen Bremsvorgängen. Derartige Fahrzustände können in einem Temperaturmodell (s. o.) entsprechend berücksichtigt sein. Insbesondere ist vorgesehen, dass das erfindungsgemäße Verfahren nur dann ausgeführt wird, wenn kritische Fahrzustände vorausgegangen sind.

Beim Abstellen des Kraftfahrzeugs kann eine (geeignete) Zeitspanne ermittelt werden, innerhalb derer das Verfahren nach dem Abstellen des Kraftfahrzeugs ausgeführt wird. D. h., nach dem Abstellen des Kraftfahrzeugs wird das erfindungsgemäße Verfahren automatisch nur über einen zuvor bestimmten Zeitraum ausgeführt. Bevorzugt beträgt die geeignete Zeitspanne 5 Minuten bis 15 Minuten, kann aber auch kürzer oder länger sein, und liegt damit unterhalb einer für das Nachheizen kritischen Zeitspanne von ca. 20 Minuten, da durch das erfindungsgemäße Verfahren der kritische Nachheizzeitraum deutlich verkürzt wird. Die Umgebungstemperatur kann gemessen und berücksichtigt werden, derart, dass sich die Zeitspanne bei niedrigeren Umgebungstemperaturen verkürzt. Eine geeignete Zeitspanne wird bevorzugt mithilfe eines Temperaturmodells (s. o.) ermittelt.

Beim Abstellen des Kraftfahrzeugs kann auch eine (geeignete) Anzahl von Intervallen (Druckintervallen) ermittelt werden, die nach dem Abstellen des Kraftfahrzeugs ausgeführt werden. D. h., nach dem Abstellen des Kraftfahrzeugs wird automatisch eine zuvor bestimmte Anzahl von Intervallen (Druckintervallen) und Pausen (Druckentlastungen) zyklisch ausgeführt. Bspw. können 20 bis 50 Intervalle vorgesehen sein, wobei auch weniger oder mehr Intervalle vorgesehen sein können. Die Umgebungstemperatur kann gemessen und berücksichtigt werden, insbesondere derart, dass sich die Intervallanzahl bei niedrigeren Umgebungstemperaturen verringert und/oder bei höheren Umgebungstemperaturen erhöht. Eine geeignete Intervallanzahl wird bevorzugt mithilfe eines Temperaturmodells (s. o.) ermittelt.

Für die Druckerzeugung, d. h. für das intervallweise Erzeugen des hydraulischen Drucks, kann eine zum Fahrdynamikregelungsmodul gehörende Pumpe verwendet werden. Für die Druckerzeugung kann auch ein elektromechanischer Bremskraftverstärkter (eBKV), der insbesondere am Hauptbremszylinder angeordnet bzw. baulicher Bestandteil des Hauptbremszylinders ist, verwendet werden.

Eine erfindungsgemäße hydraulische Kraftfahrzeugbremsanlage für ein bzw. an einem Kraftfahrzeug umfasst zumindest folgende Komponenten:
- vordere Radbremsen und hintere Radbremsen;
- einen Hauptbremszylinder, der insbesondere einen elektromechanischen Bremskraftverstärker (eBKV) aufweist;
- ein Fahrdynamikregelungsmodul (ESC) mit Steuerventilen;
- hydraulische Bremsdruckleitungen mit denen die Radbremsen am Fahrdynamikregelungsmodul angeschlossen sind; und
- ein Steuergerät, wobei dies insbesondere das Steuergerät des Fahrdynamikregelungsmoduls und/oder das Steuergerät des elektromechanischen Bremskraftverstärkers ist, welches die Kraftfahrzeugbremsanlage derart steuert, dass nach dem Abstellen des Kraftfahrzeugs im Fahrzeugstillstand die Steuerventile des Fahrdynamikregelungsmoduls geöffnet werden und in Intervallen ein hydraulischer Druck erzeugt und dadurch Bremsflüssigkeit in Richtung der Radbremsen gefördert wird, welche in den Intervallpausen zurückfließt, sodass in den Bremsdruckleitungen eine Durchmischung von warmer und kühler bzw. kühlerer Bremsflüssigkeit erfolgt und dadurch (präventiv) eine Dampfblasenbildung vermieden wird.

Die Erfindung wird nachfolgend beispielhaft und in nicht einschränkender Weise mit Bezug auf die Figuren der Zeichnung näher erläutert. Die in den Figuren gezeigten und/oder nachfolgend erläuterten Merkmale können, auch unabhängig von konkreten Merkmalskombinationen, allgemeine Merkmale der Erfindung sein und die Erfindung entsprechend weiterbilden.
- Fig. 1: zeigt eine schematische Darstellung einer hydraulischen Kraftfahrzeugbremsanlage.
- Fig. 2: zeigt in einem Ablaufplan einen möglichen Verfahrensablauf eines erfindungsgemäßen Verfahrens.

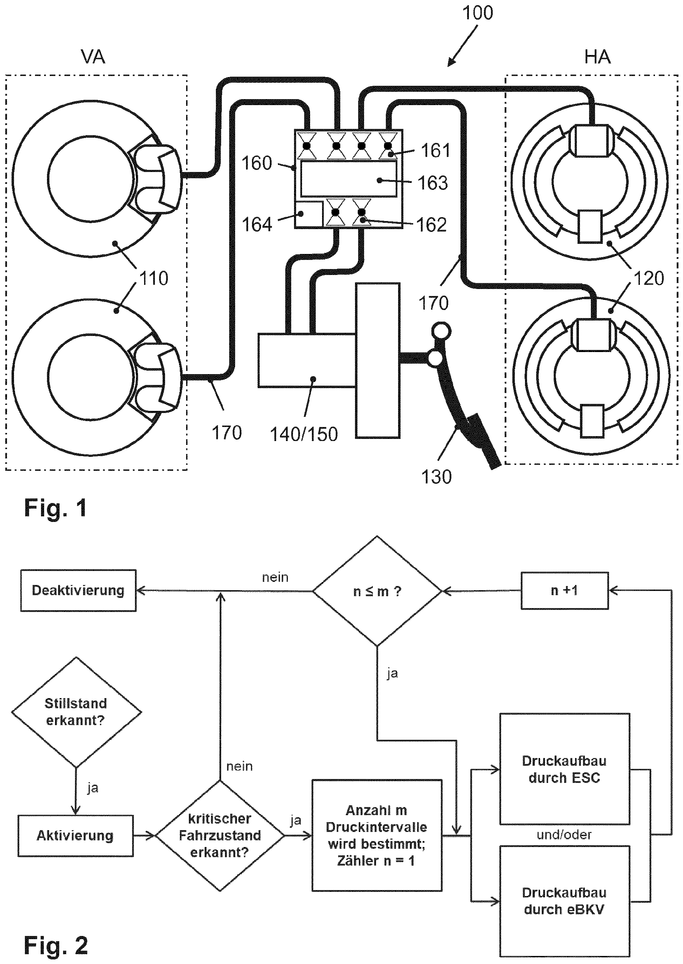

Fig. 1 zeigt schematisch eine Kraftfahrzeugbremsanlage 100, die beispielhaft zwei hydraulisch betätigte Scheibenbremsen 110 an der Vorderachse VA des Kraftfahrzeugs und zwei hydraulisch betätigte Trommelbremsen 120 an der Hinterachse HA des Kraftfahrzeugs aufweist. Die Kraftfahrzeugbremsanlage 100 weist ferner ein Bremspedal 130 und einen Hauptbremszylinder 140 mit einem elektromechanischen Bremskraftverstärker (eBKV) 150 auf. Zur Kraftfahrzeugbremsanlage 100 gehört ferner auch ein Fahrdynamikregelungsmodul (ESC-Modul) 160 mit mehreren Steuerventilen 161, mehreren Absperrventilen 162, einer Pumpe 163 und einem Steuergerät 164. Die Radbremsen 110, 120 sind über hydraulische Bremsdruckleitungen 170 einzeln am Fahrdynamikregelungsmodul 160 angeschlossen und können über die vorgeschalteten Steuerventile 161 geöffnet und geschlossen werden.

Erfindungsgemäß ist vorgesehen, dass nach dem Abstellen des Kraftfahrzeugs im Fahrzeugstillstand die Steuerventile 161 des Fahrdynamikregelungsmoduls 160 geöffnet werden und in Intervallen mit der Pumpe 164 des Fahrdynamikregelungsmoduls 160 oder mit dem elektromechanischen Bremskraftverstärker 150 ein hydraulischer Druck erzeugt und dadurch Bremsflüssigkeit in Richtung der Radbremsen 110, 120 gefördert wird. Die Bremsflüssigkeit fließt in den Intervallpausen zurück, sodass in den Bremsdruckleitungen 170 sukzessive eine Durchmischung von warmer und kühler Bremsflüssigkeit erfolgt und dadurch, insbesondere im Bereich der Radbremsen 110, 120, eine Dampfblasenbildung vermieden wird. Währenddessen sind die Absperrventile 162 geschlossen.

Fig. 2 veranschaulicht einen möglichen Verfahrensablauf. Nach dem Abstellen des Kraftfahrzeugs wird der Programmablauf gestartet (Aktivierung). Das Verfahren wird ausgeführt, falls vorausgehende kritische Fahrzustände erkannt werden. In mehreren Intervallen bzw. Druckintervallen wird nun bei geöffneten Druckventilen 161 und unbetätigtem Bremspedal 130 (bevorzugt wird dies mittels Abfrage erfasst) Bremsflüssigkeit zu den Radbremsen 110, 120 gedrückt, bis eine vorgegebene Intervallanzahl m erreicht ist, was durch einen Zähler n erfasst wird. Sobald die Intervallanzahl m erreicht ist (oder eine vorgegebene Zeitspanne verstrichen ist, wie oben beschrieben) wird das Verfahren beendet (Deaktivierung).

## Patentansprüche

1. Verfahren zur präventiven Dampfblasenvermeidung in einer hydraulischen Kraftfahrzeugbremsanlage (100) eines Kraftfahrzeugs, mit
- vorderen Radbremsen (110) und hinteren Radbremsen (120);
- einem Hauptbremszylinder (140),
- einem Fahrdynamikregelungsmodul (160) mit Steuerventilen (161); sowie
- hydraulischen Bremsdruckleitungen (170) mit denen die Radbremsen (110, 120) am Fahrdynamikregelungsmodul (160) angeschlossen sind;
**dadurch gekennzeichnet, dass**
nach dem Abstellen des Kraftfahrzeugs im Fahrzeugstillstand die Steuerventile (161) des Fahrdynamikregelungsmoduls (160) geöffnet werden und in Intervallen ein hydraulischer Druck erzeugt und dadurch Bremsflüssigkeit in Richtung der Radbremsen (110, 120) gefördert wird, welche in den Intervallpausen zurückfließt, sodass in den Bremsdruckleitungen (170) eine Durchmischung von warmer und kühler Bremsflüssigkeit erfolgt und dadurch eine Dampfblasenbildung vermieden wird.

2. Verfahren nach Anspruch 1,
**dadurch gekennzeichnet, dass**
die Verfahrenssteuerung mithilfe eines Temperaturmodells erfolgt.

3. Verfahren nach Anspruch 1 oder 2,
**dadurch gekennzeichnet, dass**
bei der Verfahrenssteuerung vorausgehende Fahrzustände berücksichtigt werden.

4. Verfahren nach einem der vorausgehenden Ansprüche 1 bis 3,
**dadurch gekennzeichnet, dass**
eine Zeitspanne ermittelt wird, innerhalb der das Verfahren nach dem Abstellen des Kraftfahrzeugs ausgeführt wird.

5. Verfahren nach einem der vorausgehenden Ansprüche 1 bis 3,
**dadurch gekennzeichnet, dass**
eine Anzahl (m) von Intervallen ermittelt wird, die nach dem Abstellen des Kraftfahrzeugs ausgeführt werden.

6. Verfahren nach Anspruch 4 oder 5,
**dadurch gekennzeichnet, dass**
bei der Ermittelung einer Zeitspanne oder bei der Ermittelung einer Anzahl (m) von Intervallen die Umgebungstemperatur berücksichtigt wird.

7. Verfahren nach einem der vorausgehenden Ansprüche 1 bis 6,
**dadurch gekennzeichnet, dass**
für die Druckerzeugung eine zum Fahrdynamikregelungsmodul (160) gehörende Pumpe (163) verwendet wird.

8. Verfahren nach einem der vorausgehenden Ansprüche 1 bis 6,
**dadurch gekennzeichnet, dass**
für die Druckerzeugung ein elektromechanischer Bremskraftverstärker (150) verwendet wird.

9. Hydraulische Kraftfahrzeugbremsanlage (100) für ein Kraftfahrzeug, mit:
- vorderen Radbremsen (110) und hinteren Radbremsen (120);
- einem Hauptbremszylinder (140);
- einem Fahrdynamikregelungsmodul (160) mit Steuerventilen (161);
- hydraulischen Bremsdruckleitungen (170) mit denen die Radbremsen (110, 120) am Fahrdynamikregelungsmodul (160) angeschlossen sind; und
- einem Steuergerät (164);
**dadurch gekennzeichnet, dass**
das Steuergerät (164) dazu ausgebildet ist, die Kraftfahrzeugbremsanlage (100) derart zu steuern, dass nach dem Abstellen des Kraftfahrzeugs im Fahrzeugstillstand die Steuerventile (161) des Fahrdynamikregelungsmoduls (160) geöffnet werden und in Intervallen ein hydraulischer Druck erzeugt und dadurch Bremsflüssigkeit in Richtung der Radbremsen (110, 120) gefördert wird, welche in den Intervallpausen zurückfließt, sodass in den Bremsdruckleitungen (170) eine Durchmischung von warmer und kühler Bremsflüssigkeit erfolgt und dadurch eine Dampfblasenbildung vermieden wird.

10. Kraftfahrzeug, mit einer hydraulischen Kraftfahrzeugbremsanlage (100) gemäß Anspruch 9.

## Claims

1. Method for preventative vapour bubble avoidance in a hydraulic motor vehicle brake system (100) of a motor vehicle, comprising
- front wheel brakes (110) and rear wheel brakes (120);
- a master brake cylinder (140);
- a driving dynamics regulation module (160) with control valves (161); and
- hydraulic brake pressure lines (170), which connect the wheel brakes (110, 120) to the driving dynamics regulation module (160);
**characterized in that,**
after the motor vehicle has been parked at a standstill, the control valves (161) of the driving dynamics regulation module (160) are opened and a hydraulic pressure is generated at intervals, and as a result brake fluid is conveyed in the direction of the wheel brakes (110, 120) and flows back in the interval pauses, with the result that warm and cool brake fluid mix in the brake pressure lines (170) and as a result the formation of vapour bubbles is avoided.

2. Method according to Claim 1,
**characterized in that**
the method is controlled using a temperature model.

3. Method according to Claim 1 or 2,
**characterized in that**
preceding vehicle states are taken into account for the method control.

4. Method according to one of the preceding Claims 1 to 3,
**characterized in that**
a length of time for which the method is carried out after the motor vehicle is parked is ascertained.

5. Method according to one of the preceding Claims 1 to 3,
**characterized in that**
a number (m) of intervals performed after the motor vehicle is parked is ascertained.

6. Method according to Claim 4 or 5,
**characterized in that**
the temperature of the surrounding area is taken into account for the ascertainment of a length of time or the ascertainment of a number (m) of intervals.

7. Method according to one of the preceding Claims 1 to 6,
**characterized in that**
a pump (163) which is part of the driving dynamics regulation module (160) is used to generate pressure.

8. Method according to one of the preceding Claims 1 to 6,
**characterized in that**
an electromechanical brake booster (150) is used to generate pressure.

9. Hydraulic motor vehicle brake system (100) for a motor vehicle, comprising:
- front wheel brakes (110) and rear wheel brakes (120);
- a master brake cylinder (140);
- a driving dynamics regulation module (160) with control valves (161);
- hydraulic brake pressure lines (170), which connect the wheel brakes (110, 120) to the driving dynamics regulation module (160); and
- a controller (164);
**characterized in that**
the controller (164) is designed to control the motor vehicle brake system (100) in such a way that, after the motor vehicle has been parked at a standstill, the control valves (161) of the driving dynamics regulation module (160) are opened and a hydraulic pressure is generated at intervals, and as a result brake fluid is conveyed in the direction of the wheel brakes (110, 120) and flows back in the interval pauses, with the result that warm and cool brake fluid mix in the brake pressure lines (170) and as a result the formation of vapour bubbles is avoided.

10. Motor vehicle comprising a hydraulic motor vehicle brake system (100) according to Claim 9.

## Revendications

1. Procédé destiné à éviter préventivement les bulles de vapeur dans un système de freinage hydraulique (100) d'un véhicule automobile comprenant
- des freins de roue avant (110) et des freins de roue arrière (120) ;
- un maître-cylindre de frein (140),
- un module de régulation de dynamique de roulement de véhicule (160) muni de soupapes de commande (161) ; ainsi que
- des conduites de pression de freinage hydraulique (170) qui raccordent les freins de roue (110, 120) au module de régulation de dynamique de roulement (160) ;
**caractérisé en ce que**
après avoir placé le véhicule automobile à l'arrêt, les soupapes de commande (161) du module de régulation de dynamique de roulement (160) sont ouvertes et une pression hydraulique est générée à intervalles et le liquide de frein est ainsi transporté en direction des freins de roue (110, 120), lequel liquide de frein refluent dans les intervalles de pause de manière à effectuer dans les conduites de pression de freinage (170) un mélange de liquide de frein chaud et de liquide de frein froid et à éviter ainsi la formation de bulles de vapeur.

2. Procédé selon la revendication 1, **caractérisé en ce que**
la commande de procédé est effectuée à l'aide d'un modèle de température.

3. Procédé selon la revendication 1 ou 2,
**caractérisé en ce que**
les états de conduite précédents sont pris en compte dans la commande de procédé.

4. Procédé selon l'une des revendications précédentes 1 à 3,
**caractérisé en ce que**
un intervalle de temps est déterminé pendant laquelle le procédé est mis en œuvre après l'arrêt du véhicule automobile.

5. Procédé selon l'une des revendications précédentes 1 à 3,
**caractérisé en ce que**
un nombre (m) d'intervalles est déterminé, lesquelles sont mis en place après l'arrêt du véhicule automobile.

6. Procédé selon la revendication 4 ou 5,
**caractérisé en ce que**
la température ambiante est prise en compte lors de la détermination d'un intervalle de temps ou lors de la détermination d'un nombre (m) d'intervalles.

7. Procédé selon l'une des revendications précédentes 1 à 6,
**caractérisé en ce que**
une pompe (163) appartenant au module de régulation de dynamique de roulement (160) est utilisée pour générer une pression.

8. Procédé selon l'une des revendications précédentes 1 à 6,
**caractérisé en ce que**
un servofrein électromécanique (150) est utilisé pour générer une pression.

9. Système de freinage hydraulique de véhicule (100) destiné à un véhicule automobile, ledit système comprenant :
- des freins de roue avant (110) et des freins de roue arrière (120) ;
- un maître-cylindre de frein (140) ;
- un module de régulation de dynamique de roulement (160) muni de soupapes de commande (161) ;
- des conduites de pression de freinage hydraulique (170) qui raccordent les freins de roue (110, 120) au module de régulation de dynamique de roulement (160) ; et
- une unité de commande (164) ;
**caractérisé en ce que**
l'unité de commande (164) est conçue pour commander le système de freinage de véhicule automobile (100) de telle sorte que, après avoir mis le véhicule automobile à l'arrêt, les soupapes de commande (161) du module de régulation de dynamique de roulement (160) sont ouvertes et une pression hydraulique est générée à intervalles et ainsi le liquide de frein est transporté en direction des freins de roue (110, 120), lequel liquide de frein reflue pendant les pauses intermittentes de façon à effectuer un mélange de liquide de frein chaud et liquide de frein froid dans les conduites de pression de freinage (170) et à éviter ainsi la formation de bulles de vapeur.

10. Véhicule automobile, muni d'un système de freinage hydraulique de véhicule automobile (100) selon la revendication 9.
